# EUROPEAN PATENT SPECIFICATION

(11) **EP 0 346 920 B1**
(45) Date of publication and mention of the grant of the patent: **25.01.1995**
(21) Application number: 89110976.1
(22) Date of filing: 16.06.1989
(51) Int. Cl.: B62D 65/00, B62D 29/04

(54) **Apparatus for and method of assembling vehicle body**
Vorrichtung und Verfahren zum Zusammenbau eines Fahrzeugaufbaus
Appareil et procédé pour assembler une caisse de véhicule

(30) Priority: 17.06.1988 JP 79560/88 U
(43) Date of publication of application: 20.12.1989
(73) Proprietor: NISSAN MOTOR CO., LTD., Yokohama City (JP)
(72) Inventor: Abe, Kazuyoshi, Tokyo (JP); Takagawa, Yukio, Yokohama City (JP); Sasaoka, Hiroshi, Zama City (JP)
(74) Representative: Grünecker, Kinkeldey, Stockmair & Schwanhäusser Anwaltssozietät

(56) References cited:
- EP-A- 0 136 190
- EP-A- 0 147 910
- GB-A- 2 028 960
- INGENIEURS DE L'AUTOMOBILE, no. 4, June 1983, pages 85-87, Paris, FR; REVOL; EGGENSCHWILLER: "Assemblage par collage des matériaux composite dans l'automobile"
- INGENIEURS DE L'AUTOMOBILE, no. 1, 1982, Paris, FR; ASEA Advet: "L'encollage -une tâche ideale pour un robot"

## Description

### BACKGROUND OF THE INVENTION

### 1. Field of the Invention

The present invention relates to an apparatus for assembling a vehicle body suitable for use on its assembly line, according to the preamble of claim 1.

### 2. Description of the Prior Art

In the past, a vehicle body assembly has been performed in a way to locate a plurality of workpieces, i.e., panels by means of gauge portions fixed in a plurality of positions on a predetermined stage of an assembly line; temporarily join the located panels each other by a spot welding to assemble a vehicle body main part which greatly concerns the assembly precision of the vehicle body; and carry out a further spot welding as well as a joining of other panels. Additionally, the following process had to be repeated to obtain a predetermined assembly precision of the vehicle body: Measure the assembly precision of the assembled vehicle body; manually perform a positional regulation by displacing, cutting and/or padding of each of the gauge portions; and recommence the vehicle body assembly. However, the manual positional regulation of the gauge portions takes a lot of time. Thus, the present applicant has proposed, in JP-A-59-144595, a locator having the gauge portions with drive mechanism by which the positional regulation thereof can be automatically carried out.

The above-mentioned locator includes a plurality of drive mechanisms displacing each of the gauge portions little by little so that it is difficult to assure sufficiently a space of welding arrangements such as a welding robot and a multispot welder for joining each other the panels constituting the vehicle body main part, causing insufficiency of a number of welding points. Contrariwise, if the number of welding points is increased, a number of gauge portions has to be decreased.

From EP-A-0 226 706 an apparatus for assembling a vehicle body is known, said apparatus having means for locating a plurality of workpieces of which the vehicle body is to be formed and means for placing an adhesive on at least one of predetermined surfaces of the plurality of workpieces to be joined.

According to EP-A-0 226 706, the apparatus in the form of a robot requires suction means including a suction plate with which respective cover material is caught and placed on the respective portion of a door panel to cover same.

However, the suction plate covers almost the complete surface of the door panel or door in order to place a cover sheet on the door panel, which requires accurate positioning and accurate pressing of the cover sheet to adhesively fix the cover sheet on the door. Accordingly, there is a disadvantage of the risk that no uniform pressure is applied to the contour of the cover sheet in the respective adhesive areas leading to unequal adhesive fixing of the cover sheet to the door panel.

Furthermore, the apparatus of this prior art has the disadvantage that the fixing process of the cover sheet on the door requires a relatively long period as no additional heating measures are provided.

It is, therefore, an object of the present invention to provide an apparatus for assembling a vehicle body, which allows an effective and appropriate joining of the plurality of workpieces including a safe and quick operation mode.

This object is achieved by the characterizing features of claim 1.

The subclaim contains a preferred embodiment of the present invention.

### BRIEF DESCRIPTION OF THE DRAWINGS

Fig. 1 is a diagrammatic view illustrating a portion of an assembly line of a vehicle body used in embodiments of an apparatus for assembling a vehicle body according to the present invention;
Fig. 2 is a diagrammatic view of a portion the apparatus and illustrates a first embodiment;
Fig. 3 is an enlarged vertical section illustrating the feature of the first embodiment shown in Fig. 2;
Fig. 4 is a view similar to Fig. 3 illustarting a second embodiment; and

### DETAILED DESCRIPTION OF THE INVENTION

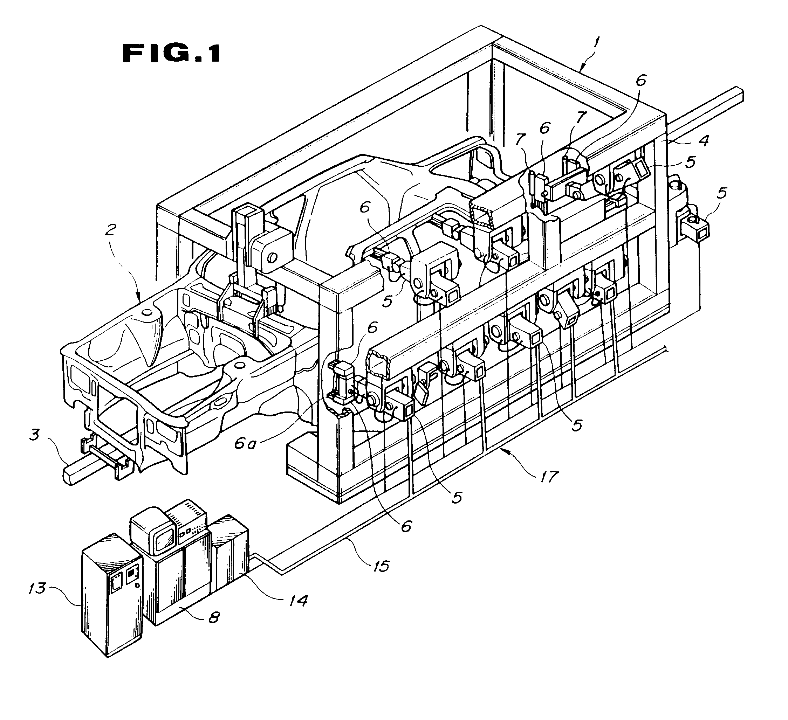

Referring now to Fig. 1, there is shown a vehicle body main part assembling stage of an assembly line of a vehicle body used in embodiments of the present invention. In Fig. 1, a locator 1 is disposed on the vehicle body main part assembling stage. As to this assembly line, workpieces, i.e., panels such as a floor main panel, right and left side panels, a rear panel, shelf panels and a cowl top assembly are carried into the vehicle body main part assembling stage. On this assembling stage, the panels are located by means of the locator 1 in a manner to satisfy a predetermined assembly precision and the located panels are temporarily joined each other to assemble a vehicle body main part 2 which greatly concerns the assembly precision of the vehicle body. Thereafter, the vehicle body main part 2 is transported by a shuttle conveyer 3 to other stages (not shown) on which a further spot welding is carried out to the vehicle body main part 2 and panels such as front and rear roof rails and roof panels are assembled to form the vehicle body. On a subsequent stage (not shown), the assembly precision of the formed vehicle body is measured. For locating each of the panels of the vehicle body main part 2 on the vehicle body main part assembling stage, the locator 1 is provided with a frame 4, a plurality of robots 5 mounted thereon, and at least one workpiece supporting jig 6 a robot 5 as its hand portion. The robot 5 is also provided with an air cylinder driven workpiece clamp device 7 as its hand portion, if condition demands.

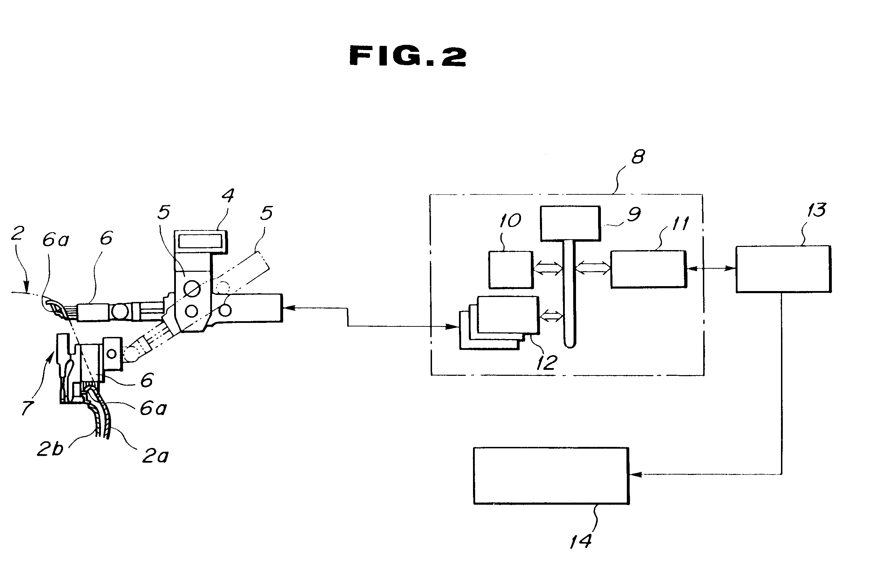

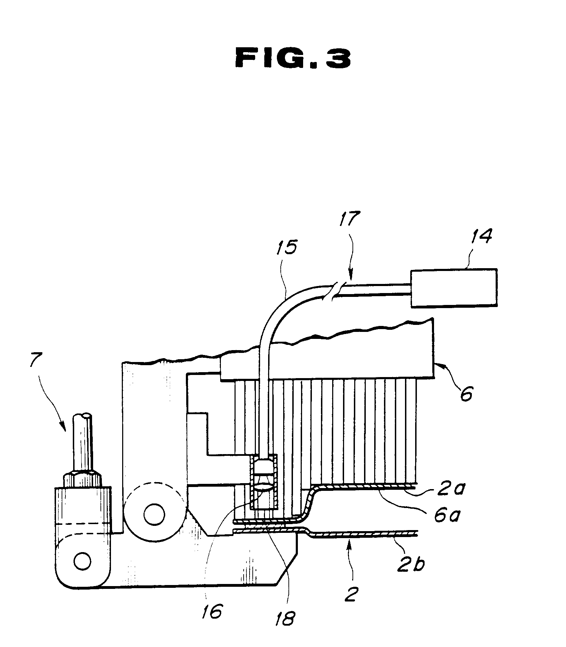

Referring to Figs. 2 and 3, there is shown a first embodiment of the present invention. With the workpiece supporting jig 6, a plurality of elongate plates adjoining each other are moved or displaced one by one in the same direction by a servo motor and are arranged to form a predetermined shape with their end portions. Thereafter, the elongate plates are closely fixed by a fixing device to constitute a locating means, i.e., a gauge portion 6a capable of locating and holding a workpiece (Refer to JP-A-59-144595). Based on such a function, the locator 1 forms a shape of the gauge portion 6a of the workpiece supporting jig 6 in accordance with a shape of each of the panels to be located (e.g., 2a and 2b) and disposes the gauge portion 6a of the workpiece supporting jig 6 on a predetermined position by means of the robot 5, thereby to locate each of the panels and fix it by the workpiece clamp device 7.

As shown in Fig. 2, a control unit 8 of the locator 1 includes an operation part 9 consisting of a CPU (central processing unit), a memory 10 used for store and calculation of an operation indicative signal, an interface 11 for input of the operation indicative signal including position data of the gauge portion 6a of the workpiece supporting jig 6 and output of an operation confirmative signal, a servo controller 12 for controlling a servo motor installed in each of joints of the robot 5 and one for driving the elongate plates of the workpiece supporting jig 6, and a controller (not shown) for controlling the fixing device of the workpiece supporting jig 6 and the workpiece clamp device 7. The control unit 8 controls operations of the robot 5, the workpiece supporting jig 6 and the workpiece clamp device 7 on the basis of the operation indicative signal inputted from a main control unit 13 of line control through the interface 11 and outputs the operation confirmative signal upon completion of the operations.

On the vehicle body main part assembling stage, there is also provided a laser heating equipment 17 which uses a laser beam emitted by a laser beam emitter 14 having a YAG (yttrium aluminum garnet) laser disposed outside the frame 4 of the locator 1 as shown in Fig. 1. The laser beam is conducted, as shown in Fig. 3, to a condenser lens 16 disposed on the side of the workpiece supporting jig 6 of each robot 5 through an optical fiber cable 15, thereby to appropriately condense the laser beam and irradiate it on one of flanges of the panels 2a and 2b to be joined adjacent to a portion located and holded by the workpiece supporting jig 6 and the workpiece clamp device 7. The laser beam emitter 14 is connected to and controlled by the main control unit 13 as shown in Fig. 2.

In the embodiment, with this assembly line, the vehicle body is assembled as described below:

First, design data of the vehicle body to be assembled which is designed by a computer-aided design (CAD) system, i.e., CAD data and position data for positioning the panels by each of the gauge portions 6a are inputted to the main control unit 13. In accordance with a predetermined program, the main control unit 13 calculates a position of each of the gauge portions 6a on the vehicle body main part assembling stage on the CAD data and determines an initial amount of displacement from an original position for each of the workpiece supporting jigs 6 which is used for disposing the workpiece supporting jigs 6 to locate each of the gauge portions 6a on the calculated position. At the same time, the control unit 13 disposes the elongate plates of each of the workpiece supporting jigs 6 in accordance with a shape of the panel and determines the initial amount of displacement from the original position for the elongate plates to form the gauge portion 6a. The main control unit 13 outputs the two initial amounts of displacement to the control unit 8 of the locator 1 with the operation indicative signal. On the signal, the control unit 8 starts each robot 5 to dispose each of the workpiece supporting jigs 6 in response to the initial amount of displacement and urges the workpiece supporting jigs 6 to form the gauge portions 6a. On the other hand, an amount of adhesive permitting a predetermined joining strength is applied to the flanges of the panels of the vehicle body main part 2 by robots equipped with an adhesive applying gun for example. The adhesive may be a thermoplastic or thermosetting resin. In the embodiment, a thermosetting urethane resin before setting is used as an adhesive. Next, each of the panels after applying the adhesive is carried into the locator 1 and is respectively located by each of the gauge portions 6a disposed in a predetermined position. In this state, the control unit 8 urges the workpiece clamp device 7 to hold the panels. Upon completion of positioning of the panels, the control unit 8 outputs the operation confirmative signal to the main control unit 13. Receiving the operation confirmative signal, the main control unit 13 starts the laser beam emitter 14 to irradiate a pulsed YAG laser beam. As stated above, the laser beam is conducted to the condenser lens 16 disposed on the side of the workpiece supporting jig 6 through the optical fiber 15 and is irradiated on one of the flanges of the panels to be joined adjacent to a portion located and holded by the workpiece supporting jig 6 and the workpiece clamp device 7, thereby to set the adhesive 18 placed on at least one of the flanges by heat transmitted from the flanges, thus causing them to join each other.

In this manner, the gauge portions 6a are automatically arranged in accordance with the CAD data, thereby to locate and hold the panels with the adhesive previously applied. In this state, the adhesive 18 is heated and set by the laser beam to join the panels, thus allowing the assembly of the vehicle body main part 2.

Thereafter, the workpiece supporting jigs 6 are returned to the original position to release the vehicle body main part 2. The released main part 2 is transported by the shuttle conveyer 3 from the vehicle main body part assembling stage to other stages on which a further spot welding is carried out to the vehicle body main part 2 and panels such as front and rear roof rails and roof panels are assembled to form the vehicle body. On a subsequent stage, the assembly precision of the formed vehicle body is measured. Additionally, the initial amounts of displacement for the workpiece supporting jigs 6 and the elongate plates determined on the CAD data are corrected on a result of measurement of the assembly precision. From the next vehicle body assembly, the following process is repeated: Dispose and form the gauge portions 6a in accordance with the corrected amounts of displacement to assemble the vehicle body main part 2; and correct further the amounts of displacement for the workpiece supporting jigs 6 and the elongate plates from the result of measurement of the assembly precision of the vehicle body including the vehicle body main part 2.

Therefore, in the first embodiment, the gauge portions 6a are automatically initially arranged in accordance with the CAD data to assemble the vehicle body main part 2, consequently, the vehicle body. By repeating the vehicle body assembly, the position of the gauge portions 6a is automatically regulated, resulting in increase in the assembly precision of the vehicle body to a predetermined value. Additionally, the panels are joined each other by heating and setting the adhesive 18 by the laser heating equipment 17 having the optical fiber cable 15 disposed between the workpiece supporting jig 6 and the robot 5 and connecting the laser beam emitter 14 provided outside the frame 4 of the locator 1 with the condenser lens 16 disposed in the workpiece supporting jig 6, allowing minimization of an operation space of a joining arrangement and realization of a predetermined joining strength.

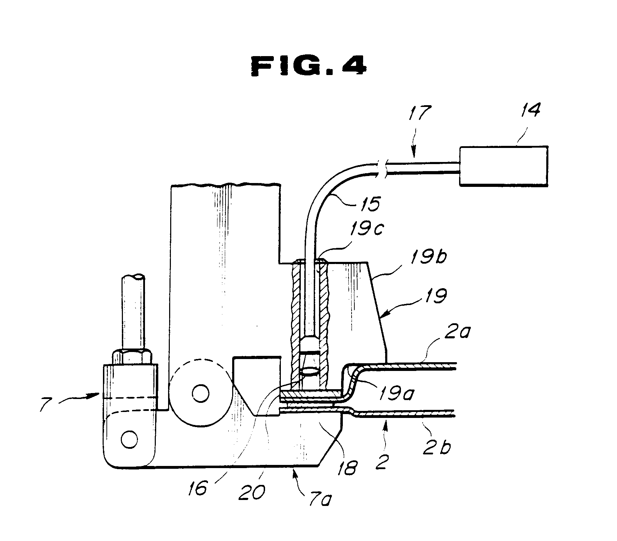

Referring to Fig. 4, there is shown a second embodiment of the present invention in which a workpiece supporting jig 19 supported and displaced by a robot 6 is that of which a gauge portion 19a is not deformable. Further, a laser heating equipment 17 provides a through hole 19c in a gauge post 19b having the gauge portion 19a and in a position opposite to a clamp arm 7a of a workpiece clamp device 7 and disposes a condenser lens 16 and an end portion of an optical fiber cable 15 in the through hole 19c. An aperture of the through hole 19c is enveloped by a thermal diffusion plate 20 having a high heat conductivity, e.g., a copper plate. With the heating equipment 17, the laser beam is conducted to a located and holded portion of flanges of the panels (2a and 2b in Fig. 4) to extensively heat this portion through the thermal diffusion plate 20, resulting in further increase in the assembly precision of the vehicle body.

In the above-mentioned locator 1, the heating means of the laser heating equipment 17 are mounted on the robots 5, respectively, for heating the adhesive 18.

Having described as related to the embodiments shown in the accompanying drawings, it is to be understood that the present invention is not limited by any of the details of description. By way of example, a hot fluid generating device with conduits or a heat pipe may be used as a means for heating the adhesive. Further, upon placing the adhesive on at least one of the flanges, the adhesive may be injected therebetween from holes or notches formed on at least one of the two flanges opposite to each other in a state wherein the panels are located and holded by the locator 1. Furthermore, the present invention may be applied not only to the assembly of the vehicle body main part 2 but also to that of the vehicle body by the locator 1.

## Claims

1. An apparatus for assembling a vehicle body, the apparatus having means (1) for locating a plurality of workpieces of which the vehicle body is to be formed and means (5, 6) for placing an adhesive on at least one of predetermined surfaces of the plurality of workpieces to be joined,
**characterised in that**
said locating means (1) are in the form of a clamp (7) including a clamp arm (7a),
a workpiece supporting jig (6, 19) and is operatively connected to said clamp (7) and includes means for defining a gauge portion (6a, 19a) which cooperates with said clamp arm (7a) to hold said plurality of workpieces therebetween and is formed with an opening, and
a heating equipment (17) is disposed to heat said adhesive and includes a laser beam source (14), a focusing lens (16) mounted within said gauge portion defining means adjacent to said opening and an optical fiber cable (15) having a portion mounted within said gauge portion defining means.

2. An apparatus for assembling a vehicle body as defined in claim 1, wherein said laser heating device includes a YAG laser.

## Patentansprüche

1. Vorrichtung zum Zusammenbau eines Fahrzeugaufbaus, wobei die Vorrichtung Mittel (1) zur Plazierung einer Vielzahl von Werkstücken, aus denen der Fahrzeugaufbau gebildet werden wird, und Mittel (5, 6) zur Anordnung eines Klebemittels an mindestens einer von vorgegebenen Oberflächen der Vielzahl der zu verbindenden Werkstücke aufweist,
**dadurch gekennzeichnet**,
daß die Plazierungsmittel (1) in der Form einer Klemme (7) einschließlich eines Klemmenarms (7a) gebildet sind,
eine Werkstückstütz- und Einspannvorrichtung (6, 19) wirksam mit der Klemme (7) verbunden ist und Mittel zur Festlegung eines Maßabschnittes (6a, 19a) enthält, der mit dem Klemmenarm (7a) zum Halten der Vielzahl der Werkstücke zwischen diesen zusammenwirkt und mit einer Öffnung ausgebildet ist, und
eine Heizvorrichtung (17) zum Heizen des Klebemittels angeordnet ist, die eine Laserstrahlquelle (14), eine neben der Öffnung in den Maßabschnittfestlegemitteln befestigte Fokussierlinse (16) und ein Lichtleitfaserkabel (15) mit einem innerhalb der Maßabschnittfestlegemittel befestigten Abschnitt enthält.

2. Vorrichtung zum Zusammenbau eines Fahrzeugaufbaus nach Anspruch 1, bei dem die Laserheizvorrichtung einen YAG-Laser enthält.

## Revendications

1. Appareil pour assembler une caisse de véhicule, l'appareil possédant des moyens (1) pour localiser une pluralité de pièces à partir desquelles la caisse de véhicule doit être formée et des moyens (5, 6) pour placer un adhésif sur au moins l'une de surfaces prédéterminées de la pluralité de pièces à assembler,
caractérisé en ce que
lesdits moyens de localisation (1) se présentent sous la forme d'un organe de serrage (7) comprenant un bras de serrage (7a),
une monture de support de pièces (6, 19) et qui est opérationnellement reliée audit organe de serrage (7) et comprend des moyens pour définir une portion de jauge (6a, 19a) qui coopère avec ledit bras de serrage (7a) pour tenir ladite pluralité de pièces entre ceux-ci et qui présente une ouverture, et
un équipement chauffant (17) est disposé pour chauffer ledit adhésif et comprend une source de faisceau laser (14), une lentille de focalisation (16) installée à l'intérieur dudit moyen définissant la portion de jauge adjacent à ladite ouverture et un câble de libres optiques (15) dont une partie est installée à l'intérieur dudit moyen définissant la portion de jauge.

2. Appareil pour assembler une caisse de véhicule selon la revendication 1, dans lequel ledit dispositif chauffant à laser comprend un laser YAG.
